# EUROPÄISCHE PATENTSCHRIFT

(11) **EP 1 582 562 B1**
(45) Veröffentlichungstag und Bekanntmachung des Hinweises auf die Patenterteilung: **09.02.2011**
(21) Anmeldenummer: 05004785.1
(22) Anmeldetag: 04.03.2005
(51) Int. Cl.: C08L 23/10

(54) **Leitungssystem enthaltend halogenfreie, polymere Werkstoffzusammensetzungen**
Conduitsystem comprising halogen-free polymer compositions
Système de conduites comprenant des composition de matériaux sans halogènes

(30) Priorität: 30.03.2004 DE 102004016125
(43) Veröffentlichungstag der Anmeldung: 05.10.2005
(73) Patentinhaber: REHAU AG + Co, 95111 Rehau (DE)
(72) Erfinder: Steffl, Udo, 95466 Weidenberg (DE)

(56) Entgegenhaltungen:
- EP-A- 1 050 557
- WO-A-2004/026913
- WO-A-2005/010097
- DATABASE CA [Online] CHEMICAL ABSTRACTS SERVICE, COLUMBUS, OHIO, US; "Polyolefin hot-melt adhesives" XP002329799 gefunden im STN Database accession no. 1985:63259 -& JP 59 159843 A (SUMITOMO CHEMICAL CO., LTD., JAPAN) 10. September 1984 (1984-09-10)

## Beschreibung

Die vorliegende Erfindung betrifft eine halogenfreie, polymere Werkstoffzusammensetzung für Leitungssysteme, bestehend mindestens aus sechs Komponenten.

Leitungssysteme im Elektronik-, Elektro-, Möbel-, Fahrzeug- oder Baubereich wie Kabelschutzrohre, Mikrokabelschutzrohre oder Leitungskanäle müssen bestimmte brandschutztechnische Anforderungen erfüllen. Dazu werden die Kunststoffe üblicher Weise mit halogenhaltigen Flammschutzmitteln versehen. Halogenhaltige Flammschutzmittel inhibieren den in der Gasphase ablaufenden Radikalkettenmechanismus der Verbrennung. Zusätzlich können Antimonverbindungen als Synergisten die Wirkung verbessern. Phosphorhaltige Flammschutzmittel wie Phosphine, Phosphinoxide, Phosphoniumverbindungen, Phosphonate, Roter Phosphor und Phosphite wirken vor allem in fester Phase durch die dehydratisierende Wirkung unter Ausbildung einer verkohlten Schicht auf der Oberfläche des Polymeren. Ein großer Teil der phosphorhaltigen Flammschutzmittel ist flüssig und besitzt somit - was oft nachteilig ist - stark weichmachende Eigenschaften.

In den letzten Jahren werden zunehmend anorganische Flammschutzmittel, insbesondere Metallhydroxide, eingesetzt. Beispielsweise zersetzt sich Aluminumhydroxid in einem Temperaturbereich von 180-200°C unter Abgabe von Wasserdampf und Umwandlung in Aluminumoxid. Dieser Umwandlungsprozess kühlt das Polymere ab, weiterhin verdünnt der gebildete Wasserdampf die brennbaren Gase und schließlich wirkt Aluminiumoxid als isolierende Schutzschicht.
Metallhydroxide haben jedoch den Nachteil, dass Sie extrem hohe Dosierungen - in der Regel zwischen 60 und 70 Gew.-% - zur Erfüllung der Brandvorschriften erfordern. Gleiches gilt für Ammoniumpolyphosphate, die Dosierungen zwischen 30 und 40 Gew-% erfordern.

Daraus ergibt sich für derartig hoch gefüllte Werkstoffe eine starke Reduktion der Schlagzähigkeit und somit ein ungünstiges Steifigkeits-/Schlagzähigkeitsverhältnis, so dass das Anforderungsprofil im Elektronik-, Elektro-, Möbel-, Fahrzeug- oder Baubereich oft nicht erfüllt wird.

Eine Reduzierung des Anteiles der anorganischen Flammschutzkomponente oder der Ammoniumpolyphosphate ist also in vielen Fällen notwendig. Daher wurden bereits durch Ionenaustausch mit organischen Kationen oder Anionen modifizierte Schichtsilikate als Synergisten in verschiedenen Polymerzusammensetzungen vorgeschlagen.

So wird beispielweise in DE 19921472 eine flammgeschützte Polymerzusammensetzung beschrieben, die aus
a) 100 Gew.-Teile eines thermoplastischen oder vernetzbaren Polymers;
b) 10 bis 200 Gew.-Teile Magnesium-, Calcium-, Zink- und/oder Aluminiumhydroxid und/oder deren Doppelhydroxide und
c) 1 bis 50 Gew.-Teile eines organisch interkalierten Schichtsilikates besteht.

Aus WO 00/66657 bekannt sind Polymergemische aus PVC und einer synergistischen Kombination aus Schichtsilikat und einem zweiten Füllstoff wie Aluminumhydroxid, Magnesiumcarbonat. Magnesiumhydroxid, Hydromagnesit, Huntit, Böhmit oder Bauxit oder einer Kombination dergleichen.

Nach US 6610770 zeigen organisch modifizierte Schichtsilikate in thermoplastischen oder duroplastischen Polymerzusammensetzungen verbesserte Flammschutzeigenschaften, wenn das Schichtsilikat interkaliert ist.

Unter Interkalierung ist dabei das Eindringen von Polymerketten in die Zwischenschichten des Silikates unter Aufweitung des Schichtabstandes zu verstehen. Der Begriff Exfolierung beschreibt das Ablösen individueller Schichten vom Schichtverband und ihr Dispergieren im Matrixpolymeren.
Um zu hohen mechanischen Eigenschaften zu kommen ist eine möglichst vollständige Exfolierung der Schichten notwendig.

Die europäische Patentanmeldung EP 1 050 557 A1 beschreibt thermoplastisch verarbeitbare Polyolefine und durch Ionenaustausch organophil modifizierte organische Füllstoffe enthaltende Polymergemische, die mindestens aus den folgenden vier Komponenten zusammengesetzt sind: 30 bis 99 Gew.-% der Komponente (A), bestehend aus einem oder mehreren unpolaren oder polaren Olefinhomo- oder -copolymeren, die in der Schmelze bei Temperaturen unterhalb von 400 °C verarbeitbar sind: 1 bis 70 Gew.-% der Komponente (B), bestehend aus einem oder mehreren anorganischen Füllstoffen, wobei einer, mehrere oder alle dieser anorganischen Füllstoffe durch Ionenaustausch mit organischen Ionen modifizierten anorganischen Schichtverbindungen mit ionischen Schichtladungen, Längen/Durchmesser-Verhältnis > 1 und Schichtabständen > 1,2 nm sind; 0,1 bis 30 Gew.-% der Komponente (C), bestehend aus linearen, cyclischen oder verzweigten Polycarbonsäuren mit mindestens zwei Carbonsäuregruppen oder Dicarbonsäureanhydriden; und 0,1 bis 30 Gew.-% der Komponente (D), bestehend aus nieder- und hochmolekularen Verbindungen, die über mindestens eine Oxirangruppe verfügen.

Die japanische Patentanmeldung JP 59-159843 A beschreibt Polyolefin-Heißschmelzklebstoffzusammensetzungen, die ein Polyolefin, das mit einer ungesättigten Carbonsäure oder einem ungesättigten Anhydrid modifiziert ist, oder dessen Blend, das ein unmodifiziertes Polyolefin enthält, und ein Ethylen-(meth)Acrylsäureester-Copolymer und ggf. ein Metalloxid, -hydroxid, -phosphat, -carbonat oder -carboxylat umfasst.

Die WO 2004/026913 A2 beschreibt ein Polyolefin-Blend, das ein Propylen enthaltendes Polymer, ein Ethylen-Copolymer-Elastomer, das ein Reaktionsprodukt eines Copolymeres von Ethylen und mindestens einem α-Olefin ist, wobei dieses Elastomer mit Maleinsäureanhydrid funktionalisiert ist, und ein Polyolefin-Metallsalz auf Ethylen-Basis umfasst.

Darüber hinaus beschreibt die WO 2005/010097 A1 ein Kunststofferzeugnis hoher Festigkeit und Flexibilität, das 10 bis 50 Massen-% an mindestens einem vernetzten Thermoplast und 90 bis 50 Massen-% an mindestens einem vernetzten Melaminharzether enthält.

Nachteilig am beschriebenen Stand der Technik ist, dass die genannten Werkstoffe für die flammgeschützten Leitungssysteme zwar die Halogenfreiheit erfüllen, jedoch können die Eigenschaften, insbesondere hohe Steifigkeit, gute Schlagzähigkeiten und Nachbrennzeiten kleiner 30 Sekunden, am Leitungssystem nicht erfüllt werden. Insbesondere ist nachteilig, dass durch Scherung und Temperaturbelastung während der Compoundierung und/oder Verarbeitung Teile der organischen Kationen oder Anionen der modifizierten Schichtsilikate abgebaut werden und es so zu Verfärbungserscheinungen kommt. Eine Einfärbung - insbesondere nach RAL 9010 (reinweiß) - ist daher entweder unmöglich oder wegen der sehr hohen Dosierung von Pigmenten unwirtschaftlich.

Aufgabe der vorliegenden Erfindung ist es daher, ein Leitungssystem zur Verfügung zu stellen, welches die genannten Nachteile und Probleme nicht aufweist und insbesondere halogenfrei flammgeschützt ist mit Nachbrenndauer von kleiner 30 Sekunden auch bei Wandstärken von kleiner 2 mm, nahezu beliebig, vor allem reinweiß, einfärbbar ist und über eine hohe Schlagzähigkeit bei hoher Steifigkeit verfügt.
Weiterhin soll der Leitungswerkstoff wesentlich kostengünstiger herstellbar sein und hohe Extrusionsgeschwindigkeiten erlauben.

Erfindungsgemäß gelingt die Lösung der Aufgabe durch die polymere Werkstoffzusammensetzung mit den Merkmalen des Anspruchs 1, wobei erfindungsgemäß zusätzlich definierte Aufbereitungsschritte und -Bedingungen, wie in den Ansprüchen 11 und 12 aufgeführt, einzuhalten sind.
Bevorzugte Ausführungen und Weiterbildungen der Erfindung sind in den Unteransprüchen ausgeführt.

Die erfindungsgemäße polymere Werkstoffzusammensetzung des halogenfreien Leitungssystems besteht mindestens aus sechs Komponenten:
(I) 100 Gewichtsanteile einer Komponente (A) bestehend aus einem Polypropylen, mit einem Schmelzindex größer 5 g/10min bei 230°C/2.16 kg oder dessen Abmischung mit einem hochsteifen Polypropylen mit einem Zug-E-Modul von größer 1600 N/mm² nach DIN ISO 527 im Verhältnis von maximal 2/1.
(II) 0,1-150 Gewichtsanteile einer Komponente (B), bezogen auf Komponente (A), be- stehend aus einem maleinsäureanhydridgepfropftem Polypropylen mit einem Ma- leinsäureanhydrid-Gehalt von größer 1% und einem Schmelzindex von kleiner 10 g/10min bei 190°C/2,0 kg.
(III) 0,1-50 Gewichtsanteile einer Komponente (C), bezogen auf Komponente (A), beste- hend aus einem Poly(ethylenvinylacetat)copolymeren oder einem Poly(ethylen- acrylatmaleinsäureanhydrid)-terpolymeren.
(IV) 0,1-500 Gewichtsanteile einer Komponente (D), bezogen auf Komponente (A), be- stehend aus Magnesiumhydroxid oder Ammoniumpolyphosphat
(V) 0,1-150 Gewichtsanteile einer Komponente (E), bezogen auf Komponente (A), be- stehend aus durch lonenaustausch mit organischen Kationen oder Anionen modifi- zierten Schichtsilikaten, wobei der Anteil der organischen Kationen oder Anionen kleiner 35 Gewichtsprozent bezogen auf 100 Gewichtsprozent Komponente (E) be- trägt.
(VI) 0,1-30 Gewichtsanteile einer Komponente (F), bezogen auf Komponente (A), beste- hend aus anorganischen und/oder organischen Farbpigmenten.

Überraschenderweise führt die erfindungsgemäße Auswahl der Komponenten (A) bis (F) und Ihre Aufbereitung in Zweischneckenextrudern bei Einhaltung der beschriebenen definierten Aufbereitungsschritte- und -bedingungen zu einem überlegenden Eigenschaftsbild, wie es in der Aufgabenstellung und den Beispielen formuliert ist.

Die Aufbereitungsschritte und Aufbereitungsbedingungen zur Herstellung von halogenfrei flammgeschützten, gut einfärbbaren Leitungssystemen mit hoher Steifigkeit und guter Schlagzähigkeit , müssen gemäß dem Erfindungsgedanken, wie nachfolgend beschrieben, gewählt werden:
In einem ersten Schritt wird eine erste Mischung, bestehend aus Polypropylen der Komponente (A), dem maleinsäureanhydrid-gepfropftem Polypropylen der Komponente (B), dem durch Ionenaustausch mit Kationen- oder Anionen organisch modifizierten Schichtsilikat derKomponente (E) und den anorganischen und/oder organischen Farbpigmenten der Komponente (F), bei einer Massetemperatur von kleiner 180°C im Zweischneckenextruder umgesetzt und so das Vorcompound hergestellt, wobei Komponente (E) über einen Sidefeeder zudosiert wird.

In einem zweiten Schritt wird nun das Vorcompound aus der ersten Mischung mit einer zweiten Mischung, bestehend aus dem Poly(ethylenvinylacetat)copolymeren oder dem Poly(ethylenacrylatmaleinsäureanhydrid)-terpolymeren der Komponente (C), dem Magnesiumhydroxid oder dem Ammoniumpolyphosphat der Komponente (D) und den anorganischen und/oder organischen Farbpigmenten der Komponente (F), im Zweischneckenextruder in der Schmelze umgesetzt, so dass nun die vollständige Rezepturzusammensetzung resultiert.

Auch dieser zweite Compoundierschritt verläuft bei Massetemperaturen von kleiner 180 °C.

Alternativ können die Farbpigmente der Komponente (F) ausschließlich der ersten Mischung, also dem Vorcompound, oder ausschließlich der zweiten Mischung zugegeben werden.

Die erfindungsgemäßen Leitungswerkstoffe weisen einen Zug-E-Modul von größer 2500 N/mm² nach DIN ISO 527 bei noch sehr guter Schlagzähigkeit bei Raumtemperatur von größer 20 kJ/m² nach DIN ISO 179 auf, weiterhin zeigen Sie am Leitungssystem bei einer Wandstärke von kleiner 2 mm eine Nachbrenndauer von kleiner 30 Sekunden gemäß DIN VDE 0604 Teil 1 und lassen sich nahezu beliebig - auch in RAL 9010 (reinweiß) - einfärben.

Im Folgenden wird die Erfindung näher erläutert.

Komponente (A) der erfindungsgemäßen Leitungswerkstoffe ist ein Polypropylen, mit Schmelzindex größer 5g/10min bei 230°C/2.16 kg oder einer Abmischung eines Polypropylens, mit Schmelzindex größer 5g/10min bei 230°C/2.16 kg mit einem hochsteifen Polypropylen mit einem Zug-E-Modul von größer 1600 N/mm² nach DIN ISO 527 im Verhältnis von maximal 2/1.

Das maleinsäureanhydridgepfropfte Polypropylen (Komponente B) besitzt einen Maleinsäureanhydridgehalt von größer 1 % und einem Schmelzindex von kleiner 10 g/10min bei 190°C/2,0 kg. Der Gewichtsanteil der Komponenten (B), bezogen auf die Komponente (A), kann zwischen 0,1 und 150 Teilen betragen.

Das Poly(ethylenvinylacetat)copolymere aus Komponente (C) besitzt bevorzugt einen Vinylacetatgehalt von größer 20 Gewichtsprozent. Das Poly(ethylenacrylatmaleinsäure-anhydrid)terpolymere aus Komponente (C) besitzt bevorzugt einen Ethyl-, Methyl- oder Butylacrylatgehalt von 5-30 Gewichtsprozent und einen Maleinsäureanhydridgehalt von 0,1-5 Gewichtsprozent. Der Gewichtsanteil der Komponenten (C), bezogen auf die Komponente (A), kann zwischen 0,1 und 50 Teilen betragen.

Das Magnesiumhydroxid aus Komponente (D) besitzt bevorzugt eine Oberflächenmodifizierung aus organischen Additiven wie Silanen, Titanaten, Ölsäuren oder aus Silikonderivaten. Das Ammoniumpolyphosphat der Komponente (D) besitzt bevorzugt einen pH-Wert von 5-9, einen Phosphorpentoxidgehalt von größer 60% und eine Wasserlöslichkeit kleiner 5 g/100ml und besitzt als Synergisten eine Polyolverbindung im Verhältnis 1/3. Der Gewichtsanteil der Komponenten (D), bezogen auf die Komponente (A), kann zwischen 0,1 und 500 Teilen betragen.

Die durch Kationenaustausch modifizierten Silikate der Komponente (E) mit ionischen Schichtladungen sind bevorzugt ausgewählt aus Zwei- oder Dreischichtsilikaten der Phyllosilikate, insbesondere der Tonerden, Montmorillonit, Hektorit, Vermikulit die entsprechend der ionischen Schichtladung durch Ionenaustausch mit organischen Kationen modifiziert sind. Organische Kationen gemäß vorstehender Beschreibung sind protonierte primäre, sekundäre und tertiäre Amine, quarternäre Ammoniumverbindungen, protonierte basische Heterocyclen wie z.B. Imidazole mit variablen Substituenten, Amidine, Harnstoffe, Iminoether, die bevorzugt mindestens eine Alkylgruppe mit mehr als 6 C-Atomen enthalten. Bevorzugt sind Organophilierung mit Stearylamin, Aminododecansäure, 2-hydroxyalkylsubstituierte Imidazole. Organische Kationen können weiterhin Metallsalze von aromatischen, aliphatischen, araliphatischen und cycloaliphatischen Carbonsäuren, Sulfonsäuren oder Phosphorsäuren sein, die bevorzugt mindestens eine Alkylgruppe mit mehr als 6 C-Atomen enthalten.

Vertreter der anionenaustauschfähigen Zweischichtsilikate sind Hydrotalcite die durch lonenaustausch mit anorganischen Anionen, bevorzugt ausgewählt aus aliphatischen Carbonsäuren, organophil gemacht werden.

Die Komponente (E) kann vor oder während des Ionenaustausches mit Polycarbonsäuren, Polyphosphorsäuren, wasserlöslichen Polymeren, z.B. Polyvinylalkohol, Polyethylenoxid, Vinylpyrrolidonhomo- und -copolymeren, Stärke, Dextrine, Dextrin- und Zuckerderivaten, Aminozuckern sowie mit ionischen und nicht-ionischen Tensiden, z.B. ethoxyliertes Nonylphenol, ethoxylierte Fettalkohole, modifiziert werden.

Der Gewichtsanteil der Komponente (E), bezogen auf die Komponente (A), kann zwischen 0,1 und 150 Teilen betragen, wobei der Anteil der organischen Kationen oder Anionen kleiner 35 Gewichtsprozent bezogen auf 100 Gewichtsprozent Komponente (E) ist.

Die Farbpigmente aus Komponente (F) sind, bevorzugt für die RAL-Einfärbung 9010 (reinweiß),-Titantioxidpigmente und gegebenenfalls weitere Abtönpigmente in unterschiedlichen Farbtönen. Der Gewichtsanteil der Komponenten (F), bezogen auf die Komponente (A), kann zwischen 0,1 und 30 Teilen betragen.

Die Komponente (C) der erfindungsgemäßen Leitungswerkstoffe wirkt dabei als Phasenvermittler für (A) und (D), während Komponente (B) als Phasenvermittler für (A) und (E) fungiert.

Die erfindungsgemäße polymere Werkstoffzusammensetzung kann gegebenenfalls bis zu 200 Gewichtsanteilen Zusätze, bezogen auf Komponente (A), enthalten, in Form von bis zu 20 Gewichtsanteilen Gleit- oder Verarbeitungshilfsmittel, bis zu 50 Gewichtsanteilen weiterer Füllstoffe wie Talkum, bis zu 20 Gewichtsanteilen Nukleierungsmittel, bis zu 10 Gewichtsanteil Stabilisatoren, bis zu 20 Gewichtsanteilen Antistatika, bis zu 50 Gewichtsanteilen Schlagzähmodifier und bis zu 100 Gewichtanteilen weiterer synergistisch wirksamer Flammschutzmittel wie Zinkborat, Melamincyanurat, Dimelaminorthophosphat, Dimelaminpyrophosphat, Melaminorthophosphat, Melaminborat, Borphosphat, Phosphorsäurester oder Zinksulfid. Die synergistisch wirksamen Flammschutzmittel, insbesondere ausgewählt aus den phosphor- oder stickstoffhaltigen Flammschutzmitteln, können auch in den Silikaten der Komponente (E) bevorzugt ausgewählt aus Zwei- oder Dreischichtsilikaten der Phyllosilikate, insbesondere der Tonerden, Montmorillonit, Hektorit, Vermikulit interkaliert sein.
Diese Interkalierung erfolgt in einem separaten Aufbereitungsschritt vor der Compoundierung.

Die erfindungsgemäßen halogenfrei flammgeschützten polymeren Werkstoffzusammensetzungen werden bevorzugt im Elektronik-, Elektro-, Möbel-, Fahrzeug- oder Baubereich als Kabelschutzrohre, Mikrokabelschutzrohre oder Leitungskanäle verwendet.

Die folgenden Beispiele erläutern die vorliegende Erfindung, ohne jedoch darauf beschränkt zu sein.

Dabei enthalten die Beispiele 1 und 2 ausdrücklich keine Farbpigmente, um die überlegene Einfärbbarkeit der erfindungsgemäßen Werkstoffzusammensetzungen im Vergleich zum Stand der Technik zu dokumentieren.

### Beispiele 1-8:

In einem Doppelschneckenextruder mit Dosiereinrichtung für Granulate und Pulver werden bei Massetemperaturen von maximal 180°C in einem ersten Schritt das Polypropylen der Komponente (A) mit dem maleinsäureanhydridgepfropftem Polypropylen der Komponente (B) und dem durch Ionenaustausch mit organischen Kationen- oder Anionen modifizierten Schichtsilikat der Komponente (E) vorcompoundiert, wobei Komponente (E) über einen Sidefeeder zudosiert wird (siehe Tabelle 1). In einem zweiten Schritt wird nun das Gemenge aus dem Vorcompound mit dem Poly(ethylenvinylacetat)copolymeren der Komponente (C) und dem Magnesiumhydroxid oder dem Ammoniumpolyphosphat der Komponente (D) und den TiO₂-Pigmenten der Komponente (F) und bei Temperaturen von maximal 180°C im Zweischneckenextruder vermischt, so dass die vollständige Rezepturzusammensetzung resultiert (Tabelle 2)
Die Bestandteile der Zusammensetzungen sind in Gewichtsanteilen, bezogen auf 100 Gewichtsanteile der Komponente (A), angegeben.

**Tabelle 1: Zusammensetzungen der erfindungsgemäßen Vorcompounds**

| Vorcompound | 1 | 2 | 3 |
|---|---|---|---|
| PP1[1] | 100 | 100 | 100 |
| PP-MAH [3] | 82,5 | 75 | 117 |
| Schichtsilikat 1 [7] | 67,5 | | |
| Schichtsilikat 2 [8] | | 75 | |
| Schichtsilikat 3 [9] | | | 117 |

**Tabelle 2: Vollständige erfindungsgemäße Rezepturzusammensetzung**

| Beispiel | 1 | 2 | 3 | 4 | 5 | 6 | 7 | 8 |
|---|---|---|---|---|---|---|---|---|
| Vorcompound 1 | 87 | | | 87 | | | 154 | 11 |
| Vorcompound 2 | | 87 | | | 87 | | | |
| Vorcompound 3 | | | 87 | | | 87 | | |
| PP 1 [1] | 100 | 100 | 100 | 100 | 100 | 100 | 100 | 100 |
| PP 2 [2] | | | | | | | 38,5 | |
| EVA [4] | 19,6 | 19,6 | 19,6 | 19,6 | 19,6 | 19,6 | 34,6 | |
| Mg(OH)₂ [5] | 228 | 228 | 228 | 228 | 228 | 228 | 404 | |
| Talkum [10] | | | | | | | 38,5 | |
| APP [6] | | | | | | | | 28 |
| TiO₂ [11] | | | | 18,5 | 16,4 | 4,5 | 17,5 | 3,0 |

| | | | | | | | | |
|---|---|---|---|---|---|---|---|---|
| [1] PP 1: Polypropylen, Schmelzindex 12g/10min bei 230°C/2.16 kg, Zug-E-Modul 1450 MPa. [2] PP 2: Polypropylen, Zug-E-Modul 2150 MPa. [3] PP-MAH: Maleinsäureanhydridgepfropftes Polypropylen, Maleinsäureanhydrid-Gehalt 1 %, Schmelzindex 5g/10min bei 190°C/2,0 kg . [4] EVA: Poly(ethylenvinylacetat)copolymeres, Vinylacetagehalt 70 Gewichtsprozent, Mooney Viskosität (UML (1+4) 100°C), 27. [5] Mg(OH)₂: Magnesiumhydroxid [6] APP: Ammoniumpolyphosphat, P₂O₅-Gehalt 72%, pH-Wert 5-6, versetzt mit einer Polyolverbindung als Synergist im Verhältnis 1/3 zum Ammoniumpolyphosphat [7] Schichtsilikat 1: mit Distearyldimethylammoniumchlorid organisch modifiziertes Schichtsilikat vom Montmorillonittyp, Gehalt 35 Gewichtsprozent, D-Spacing aus XRD-Spektrum 28 Angström. [8] Schichtsilikat 2: mit einer Tetraalkylammoniumverbindung organisch modifiziertes Schichtsilikat vom Hectorittyp, Gehalt 20 Gewichtsprozent, D-Spacing aus XRD-Spektrum 24 Angström. [9] Schichtsilikat 3: mit Propionsäure organisch modifiziertes Schichtsilikat vom Hydrotalcittyp, Gehalt 10 Gewichtsprozent, D-Spacing aus XRD-Spektrum 14 Angström. [10] Talkum: 5y Talkum [11] Titandioxid TiO₂ | | | | | | | | |

Die nachfolgende Tabelle 3 zeigt die mechanischen Eigenschaften der erfindungsgemäßen polymeren Werkstoffzusammensetzungen:

**Tabelle 3:**

| Eigenschaft | Einheit | Norm | Beispiel 1 | Beispiel 2 | Beispiel 3 | Beispiel 4 | Beispiel 5 | Beispiel 6 | Beispiel 7 | Beispiel 8 |
|---|---|---|---|---|---|---|---|---|---|---|
| E-Modul | [MPa] | ISO 527 | 3229 | 3162 | 3370 | 3320 | 3243 | 3400 | 3350 | 2550 |
| Dichte | [g/cm³] | | 1,37 | 1,38 | 1,40 | 1,39 | 1,39 | 1,46 | 1,42 | 1,10 |
| Schlagprüfung | [kJ/m²] | DIN VDE 0604 | Ohne Bruch | Ohne Bruch | Ohne Bruch | Ohne Bruch | Ohne Bruch | Ohne Bruch | Ohne Bruch | Ohne Bruch |
| Farbe | | | Leichter Grünstich | Leichter Rotstich | Fast weiß | Reinweiß | Reinweiß | Reinweiß | Reinweiß | Reinweiß |
| Flammwidrigkeit Nachbrennzeiten | [sec] | DIN VDE 0604 | 21 | 29 | 30 | 20 | 28 | 29 | 19 | 14 |

Im Folgenden werden nun den erfindungsgemäßen Werkstoffzusammensetzungen zwei Vergleichsbeispiele nach dem Stand der Technik gegenüber gestellt:

### Vergleichsbeispiel 1:

Identische Verfahrenstechnik wie in den Bespielen 1-8, jedoch Rezeptur mit Schichtsilikat 4 mit einem Gehalt von 45 Gewichtsprozent an Distearyldimethylammoniumchlorid im Silikat (anstelle von 35 Gew.-% bei Beispiel 1).

### Vergleichsbeispiel 2:

In einem Doppelschneckenextruder mit Dosiereinrichtung für Granulate und Pulver werden bei einer erhöhten Massetemperaturen von 230°C alle Komponenten gleichzeitig in den Extruder über den zentralen Einzug dosiert.

Die Mischung wird aufgeschmolzen, strangförmig extrudiert und geschnitten. Das resultierende Thermoplastgemisch hat die in der Tabelle 5 angegebenen Eigenschaften, wobei auffällig ist, dass die Nachbrennzeiten der Rezepturen aus den Vergleichsbeispielen viel zu hoch sind(Flammwidrigkeit nach DIN VDE 0604 nicht bestanden) und eine weiße Einfärbung aufgrund der dunkelbraunen Eigenfarbe schwierig bis unmöglich ist.

Die Zusammensetzungen der Vergleichsbeispiele 1 und 2 finden sich in Tabelle 4, die Eigenschaften der Vergleichsbeispiele in Tabelle 5.

**Tabelle 4: Zusammensetzung der Vergleichsbeispiele**

| Vergleichsbeispiel | 1 | 2 |
|---|---|---|
| Vorcompound 1 | 87 | |
| PP 1 [1] | 100 | 100 |
| PP-MAH [3] | | 21,3 |
| EVA [4] | 19,6 | 14,5 |
| Mg(OH)₂ [5] | 228 | 169 |
| Schichtsilikat 4 [12] | | 19,3 |

| | | |
|---|---|---|
| [12] Schichtsilikat 4: mit Distearyldimethylammoniumchlorid organisch modifiziertes Schichtsilikat vom Montmorillonittyp, Gehalt 45 Gewichtsprozent, D-Spacing aus XRD-Spektrum 35 Angström. | | |

**Tabelle 5: Eigenschaften der Vergleichsbeispiele**

| Eigenschaft | Einheit | Norm | Vergleichsbeispiel 1 | Vergleichsbeispiel 2 |
|---|---|---|---|---|
| E-Modul | [MPa] | ISO 527 | 2850 | 2760 |
| Dichte | [g/cm³] | | 1,384 | 1,390 |
| Schlagprüfung | [kJ/m²] | DIN VDE 0604 | Ohne Bruch | Ohne Bruch |
| Farbe (ohne Pigmente) | | | Dunkelbraun | Dunkelbraun |
| Flammwidrigkeit Nachbrennzeiten | [sec] | DIN VDE 0604 | >40 (Prüfung nicht bestanden) | >40 (Prüfung nicht bestanden) |

## Patentansprüche

1. Halogenfreie, polymere Werkstoffzusammensetzung für Leitungssysteme mit verbesserten mechanischen Eigenschaften, bestehend mindestens aus folgenden Komponenten:
(I) 100 Gewichtsanteile einer Komponente (A) bestehend aus einem Polypropylen, dessen Schmelzindex größer 5 g/10min bei 230 °C/2,16 kg ist oder dessen Abmischung mit einem hochsteifen Polypropylen mit einem Zug-E-Modul von größer 1600 N/mm² nach DIN ISO 527 im Verhältnis von maximal 2/1.
(II) 0,1-150 Gewichtsanteile einer Komponente (B), bezogen auf Komponente (A), bestehend aus einem maleinsäureanhydridgepfropftem Polypropylen mit einem Maleinsäureanhydrid-Gehalt von größer 1% und einem Schmelzindex von kleiner 10 g/10 min bei 190 °C/2,0 kg.
(III) 0,1-50 Gewichtsanteile einer Komponente (C), bezogen auf Komponente (A), bestehend aus einem Poly(ethylenvinylacetat)copolymeren oder einem Poly(ethylenacrylatmaleinsäureanhydrid)terpolymeren.
(IV) 0,1-500 Gewichtsanteile einer Komponente (D), bezogen auf Komponente (A), bestehend aus Magnesiumhydroxid oder Ammoniumpolyphosphat.
(V) 0,1-150 Gewichtsanteile einer Komponente (E), bezogen auf Komponente (A), bestehend aus durch Ionenaustausch mit organischen Kationen oder Anionen modifizierten Schichtsilikaten, wobei der Anteil der organischen Kationen oder Anionen kleiner 35 Gewichtsprozent bezogen auf 100 Gewichtsprozent Komponente (E) beträgt.
(VI) 0,1-30 Gewichtsanteile einer Komponente (F), bezogen auf Komponente (A), bestehend aus anorganischen und/oder organischen Farbpigmenten.

2. Halogenfreie polymere Werkstoffzusammensetzung für Leitungssysteme nach Anspruch 1,
**dadurch gekennzeichnet,**
**dass** das Poly(ethylenvinylacetat)copolymere aus Komponente (C) bevorzugt einen Vinylacetatgehalt von größer 20 Gewichtsprozent enthält und das Poly(ethylenacrylatmaleinsäureanhydrid)-terpolymere aus Komponente (C) bevorzugt einen Ethyl-, Methyl- oder Butylacrylatgehalt von 5-30 Gewichtsprozent und einen Maleinsäureanhydridgehalt von 0,1-5 Gewichtsprozent besitzt.

3. Halogenfreie polymere Werkstoffzusammensetzung für Leitungssysteme nach Anspruch 1, **dadurch gekennzeichnet, dass** das Magnesiumhydroxid aus Komponente (D) bevorzugt eine Oberflächenmodifizierung aus organischen Additiven Silanen, Titanaten, Ölsäuren oder aus Silikonderivaten besitzt.

4. Halogenfreie polymere Werkstoffzusammensetzung für Leitungssysteme nach Anspruch 1, **dadurch gekennzeichnet, dass** das Ammoniumpolyphosphat aus Komponente (D) bevorzugt einen pH-Wert von 5-9, einen Phosphorpentoxidgehalt von größer 60 % und eine Wasserlöslichkeit kleiner 5 g/100 ml besitzt.

5. Halogenfreie polymere Werkstoffzusammensetzung für Leitungssysteme nach Anspruch 1, **dadurch gekennzeichnet, dass** das durch Kationenaustausch modifizierte Silikat der Komponente (E) ausgewählt ist aus Zwei- oder Dreischichtsilikaten der Phyllosilikate, insbesondere der Tonerden, Montmorillonit, Hektorit, Vermikulit.

6. Halogenfreie polymere Werkstoffzusammensetzung für Leitungssysteme nach Anspruch 1, **dadurch gekennzeichnet, dass** das durch Anionenaustausch modifizierte Silikat der Komponente (E) ein Hydrotalcit ist.

7. Halogenfreie polymere Werkstoffzusammensetzung für Leitungssysteme nach Anspruch 5. **dadurch gekennzeichnet, dass** die Kationen ausgewählt werden aus der Gruppe protonierte primäre, sekundäre und tertiäre Amine, quarternäre Ammoniumverbindungen, protonierte basische Heterocyclen wie z.B. imidazole mit variablen Substituenten, Amidine, Harnstoffe, Iminoether, die bevorzugt mindestens eine Alkylgruppe mit mehr als 6 C-Atomen enthalten,
Metallsalze von aromatischen, aliphatischen, araliphatischen und cycloaliphatischen Carbonsäuren, Sulfonsäuren oder Phosphorsäuren, die bevorzugt mindestens eine Alkylgruppe mit mehr als 6 C-Atomen enthalten. Besonders bevorzugt ist die Organophilierung mit Stearylamin, Aminododecansäure, oder 2-Hydroxyalkyl-substituierten Imidazolen.

8. Halogenfreie polymere Werkstoffzusammensetzung für Leitungssysteme nach Anspruch 6, **dadurch gekennzeichnet, dass** die Anionen bevorzugt ausgewählt sind aus der Gruppe der aliphatischen Carbonsäuren .

9. Halogenfreie polymere Werkstoffzusammensetzung für Leitungssysteme nach einem der vorigen Ansprüche, **dadurch gekennzeichnet, dass** Zusätze in Form von Gleit- oder Verarbeitungshilfsmitteln, Füllstoffen Nukleierungsmitteln, Stabilisatoren, Antistatika, Schlagzähmodifier und/oder synergistisch wirksamer Flammschutzmittel enthalten sein können.

10. Halogenfreie, polymere Werkstoffzusammensetzung für Leitungssysteme nach Anspruch 9, **dadurch gekennzeichnet, dass** die synergistisch wirksamen Flammschutzmittel ausgewählt sind aus der Gruppe Zinkborat, Melamincyanurat, Dimelaminorthophosphat, Dimelaminpyrophosphat, Melaminorthophosphat, Melaminborat, Borphosphat, Phosphorsäurester oder Zinksulfid.

11. Halogenfreie polymere Werkstoffzusammensetzung für Leitungssysteme nach einem der Ansprüche 9 und 10, **dadurch gekennzeichnet, dass** die synergistisch wirksamen Flammschutzmittel, insbesondere ausgewählt sind aus phosphor- oder stickstoffhaltigen Flammschutzmitteln, in die Silikate der Komponente (E), ausgewählt aus Zwei- oder Dreischichtsilikaten der Phyllosilikate, insbesondere der Tonerden, Montmorillonit, Hektorit, Vermikulit, interkaliert sind.

12. Halogenfreie polymere Werkstoffzusammensetzung für Leitungssysteme nach Anspruch 11, **dadurch gekennzeichnet, dass** die Interkalierung der phosphor- oder stickstoffhaltigen synergistischen Flammschutzmittel in die Silikate der Komponente (E) in einem separaten Aufbereitungsschritt erfolgt.

13. Verfahren zur Herstellung einer halogenfreien polymeren Werkstoffzusammensetzung für Leitungssysteme nach Anspruch 1, **dadurch gekennzeichnet, dass** in einem ersten Schritt eine erste Mischung, bestehend aus dem Polypropylen der Komponente (A), dem maleinsäureanhydridgepfropftem Polypropylen der Komponente (B), dem durch Ionenaustausch mit organischen Kationen- oder Anionen modifizierten Schichtsilikat der Komponente (E) und den anorganischen und/oder organischen Farbpigmenten der Komponente (F) bei einer Massetemperatur kleiner 180 °C im Zweischneckenextruder umgesetzt und so vorcompoundiert wird, wobei Komponente (E) über einen Sidefeeder zudosiert wird.
In einem zweiten Schritt wird dann das Vorcompound, also die erste Mischung, mit einer zweiten Mischung, bestehend aus dem Poly(ethylenvinylacetat)copolymeren oder dem Poly(ethylenacrylatmaleinsäureanhydrid)-terpolymeren der Komponente (C), dem Magnesiumhydroxid oder dem Ammoniumpolyphosphat der Komponente (D) und den anorganischen und/oder organischen Farbpigmenten der Komponente (F) im Zweischneckenextruder bei Temperaturen kleiner 180 °C in der Schmelze umgesetzt, so dass nun die vollständige Rezepturzusammensetzung resultiert

14. Verfahren nach Anspruch 13, **dadurch gekennzeichnet, dass** die Farbpigmente der Komponente (F) ausschließlich der ersten Mischung oder ausschließlich der zweiten Mischung zugegeben werden.

15. Leitungssysteme aus der halogenfreien polymeren Werkstoffzusammensetzung nach einem der Ansprüche 1 bis 12 zur Anwendung in den Bereichen Automobil, Möbel, Elektro oder Bau.

16. Leitungssysteme nach Anspruch 15, wobei diese umfassen Kabeischutzrohre, Mikrokabeischutzrohre oder Leitungskanäle für Kabel.

## Claims

1. Halogen-free, polymeric material composition for conduit systems, having improved mechanical properties, consisting at least of the following components:
(I) 100 weight fractions of a component (A) composed of a polypropylene whose melt index is greater than 5 g/10 min at 230°C/2.16 kg or blend thereof with a high-stiffness polypropylene having a tensile elasticity modulus of greater than 1600 N/mm2 in accordance with DIN ISO 527, in a ratio of not more than 2/1.
(II) 0.1-150 weight fractions of a component (B), relative to component (A), composed of a maleic anhydride-grafted polypropylene having a maleic anhydride content of greater than 1% and a melt index of less than 10 g/10 min at 190°C/2.0 kg.
(III) 0.1-50 weight fractions of a component (C), relative to component (A), composed of a poly(ethylene-vinyl acetate) copolymer or a poly(ethylene-acrylate-maleic anhydride) terpolymer.
(IV) 0.1-500 weight fractions of a component (D), relative to component (A), composed of magnesium hydroxide or ammonium polyphosphate.
(V) 0.1-150 weight fractions of a component (E), relative to component (A), composed of phyllosilicates modified by ion exchange with organic cations or anions, the fraction of the organic cations or anions being less than 35 per cent by weight, based on 100 per cent by weight of component (E).
(VI) 0.1-30 weight fractions of a component (F), relative to component (A), composed of inorganic and/or organic colour pigments.

2. Halogen-free polymeric material composition for conduit systems, according to Claim 1, **characterized in that** the poly(ethylene-vinyl acetate) copolymer from component (C) preferably comprises a vinyl acetate content of more than 20 per cent by weight, and the poly(ethylene-acrylate-maleic anhydride) terpolymer from component (C) preferably possesses an ethyl, methyl or butyl acrylate content of 5 30 per cent by weight and a maleic anhydride content of 0.1 5 per cent by weight.

3. Halogen-free polymeric material composition for conduit systems, according to Claim 1, **characterized in that** the magnesium hydroxide from component (D) preferably possesses a surface modification comprising organic additives, silanes, titanates, oleic acids or comprising silicone derivatives.

4. Halogen-free polymeric material composition for conduit systems, according to Claim 1, **characterized in that** the ammonium polyphosphate from component (D) preferably possesses a pH of 5 9, a phosphorus pentoxide content of more than 60% and a water-solubility of less than 5 g/100 ml.

5. Halogen-free polymeric material composition for conduit systems, according to Claim 1, **characterized in that** the silicate of component (E) modified by cation exchange is selected from two-layer or three-layer silicates of the phyllosilicates, more particularly of the argillaceous earths, montmorillonite, hectorite and vermiculite.

6. Halogen-free polymeric material composition for conduit systems, according to Claim 1, **characterized in that** the silicate of component (E) modified by anion exchange is a hydrotalcite.

7. Halogen-free polymeric material composition for conduit systems, according to Claim 5, **characterized in that** the cations are selected from the group of protonated primary, secondary and tertiary amines, quaternary ammonium compounds, protonated basic heterocycles such as, for example, imidazoles with variable substituents, amidines, ureas, imino ethers, preferably containing at least one alkyl group having more than 6 C atoms, metal salts of aromatic, aliphatic, araliphatic and cycloaliphatic carboxylic acids, sulphonic acids or phosphoric acids, preferably containing at least one alkyl group having more than 6 C atoms. Particularly preferred is the organophilicization with stearylamine, amino-dodecanoic acid, or 2 hydroxyalkyl-substituted imidazoles.

8. Halogen-free polymeric material composition for conduit systems, according to Claim 6, **characterized in that** the anions are preferably selected from the group of aliphatic carboxylic acids.

9. Halogen-free polymeric material composition for conduit systems, according to any of the preceding claims, **characterized in that** additions in the form of lubricants or processing assistants, fillers, nucleating agents, stabilizers, antistats, impact modifiers and/or synergistic flame retardants may be present.

10. Halogen-free, polymeric material composition for conduit systems, according to Claim 9, **characterized in that** the synergistic flame retardants are selected from the group of zinc borate, melamine cyanurate, dimelamine orthophosphate, dimelamine pyrophosphate, melamine orthophosphate, melamine borate, boron phosphate, phosphoric esters or zinc sulphide.

11. Halogen-free polymeric material composition for conduit systems, according to either of Claims 9 and 10, **characterized in that** the synergistic flame retardants are selected more particularly from phosphorus-containing or nitrogen-containing flame retardants intercalated with silicates of component (E) selected from two-layer or three-layer silicates of the phyllosilicates, more particularly of the argillaceous earths, montmorillonite, hectorite and vermiculite

12. Halogen-free polymeric material composition for conduit systems, according to Claim 11, **characterized in that** the phosphorus-containing or nitrogen-containing synergistic flame retardants are intercalated into the silicates of component (E) in a separate conditioning step.

13. Method for producing a halogen-free polymeric material composition for conduit systems, according to Claim 1, **characterized in that** in a first step a first mixture, consisting of the polypropylene of component (A), the maleic anhydride-grafted polypropylene of component (B), the phyllosilicate of component (E) modified by ion exchange with organic cations or anions, and the inorganic and/or organic colour pigments of component (F), is reacted in a twin-screw extruder at a mixture temperature of less than 180°C and is precompounded in this way, component (E) being fed in via a side feeder.
In a second step the precompound, i.e. the first mixture, is then reacted with a second mixture, consisting of the poly(ethylene-vinyl acetate) copolymer or the poly(ethylene-acrylate-maleic anhydride) terpolymer of component (C), the magnesium hydroxide or the ammonium polyphosphate of component (D) and the inorganic and/or organic colour pigments of component (F), in the melt in a twin-screw extruder at temperatures less than 180°C, to give the complete formula composition.

14. Method according to Claim 13, **characterized in that** the colour pigments of component (F) are added exclusively to the first mixture or exclusively to the second mixture.

15. Conduit systems comprising the halogen-free polymeric material composition according to any of Claims 1 to 12, for use in the automotive, furniture, electrical or construction sectors.

16. Conduit systems according to Claim 15, comprising cable-protection pipes, microcable-protection pipes or ducts for cables.

## Revendications

1. Composition de matériau polymère, exempte d'halogènes pour systèmes conducteurs, présentant des propriétés mécaniques améliorées, constituée par au moins les composants suivants :
(I) 100 parties en poids d'un composant (A) constitué par un polypropylène, dont l'indice de fusion est supérieur à 5 g/10 min à 230°C/2,16 kg ou dont son mélange avec un polypropylène hautement rigide présente un module de traction E supérieur à 1600 N/mm2 selon la norme DIN ISO 527 dans un rapport d'au maximum 2/1,
(II) 0,1-150 parties en poids d'un composant (B), par rapport au composant (A), constitué par un polypropylène greffé avec de l'anhydride de l'acide maléique présentant une teneur en anhydride d'acide maléique supérieure à 1% et un indice de fusion inférieur à 10 g/10 min à 190°C/2,0 kg,
(III) 0,1-50 parties en poids d'un composant (C), par rapport au composant (A), constitué par un copolymère de poly(éthylène-acétate de vinyle) ou un terpolymère de poly(éthylène-acrylate-anhydride de l'acide maléique),
(IV) 0,1-500 parties en poids d'un composant (D), par rapport au composant (A), constitué par de l'hydroxyde de magnésium ou du polyphosphate d'ammonium,
(V) 0,1-150 parties en poids d'un composant (E), par rapport au composant (A), constitué par des silicates à couches modifiés par échange d'ions avec des cations ou des anions organiques, où la proportion de cations ou d'anions organiques est inférieure à 35% en poids par rapport à 100% en poids de composant (E),
(VI) 0,1-30 parties en poids d'un composant (F), par rapport au composant (A), constitué par des pigments colorés inorganiques et/ou organiques.

2. Composition de matériau polymère, exempte d'halogènes pour systèmes conducteurs selon la revendication 1, **caractérisée en ce que** le copolymère de poly(éthylène-acétate de vinyle) du composant (C) présente de préférence une teneur en acétate de vinyle supérieure à 20% en poids et le terpolymère de poly(éthylène-acrylate-anhydride de l'acide maléique) du composant (C) présente de préférence une teneur en acrylate d'éthyle, de méthyle ou de butyle de 5-30% en poids et une teneur en anhydride de l'acide maléique de 0,1-5% en poids.

3. Composition de matériau polymère, exempte d'halogènes pour systèmes conducteurs selon la revendication 1, **caractérisée en ce que** l'hydroxyde de magnésium du composant (D) présente de préférence une modification de surface constituée par des additifs organiques de types silanes, titanates, acides oléiques ou des dérivés de silicone.

4. Composition de matériau polymère, exempte d'halogènes pour systèmes conducteurs selon la revendication 1, **caractérisée en ce que** le polyphosphate d'ammonium du composant (D) présente de préférence un pH de 5-9, une teneur en pentoxyde de phosphore supérieure à 60% et une solubilité dans l'eau inférieure à 5 g/100 ml.

5. Composition de matériau polymère, exempte d'halogènes pour systèmes conducteurs selon la revendication 1, **caractérisée en ce que** le silicate modifié par échange de cations du composant (E) est choisi parmi les silicates à deux ou trois couches des phyllosilicates, en particulier les argiles, la montmorillonite, l'hectorite, la vermiculite.

6. Composition de matériau polymère, exempte d'halogènes pour systèmes conducteurs selon la revendication 1, **caractérisée en ce que** le silicate modifié par échange d'anions du composant (E) est un hydrotalcite.

7. Composition de matériau polymère, exempte d'halogènes pour systèmes conducteurs selon la revendication 5, **caractérisée en ce que** les cations sont choisis dans le groupe des amines protonées primaires, secondaires et tertiaires, des composés d'ammonium quaternaire, des hétérocycles basiques protonés tels que par exemple les imidazoles avec des substituants variables, les amidines, les urées, les iminoéthers, qui contiennent de préférence au moins un groupe alkyle comprenant plus de 6 atomes de carbone, des sels métalliques d'acides carboxyliques, sulfoniques ou phosphoriques aromatiques, aliphatiques, araliphatiques ou cycloaliphatiques qui contiennent de préférence au moins un groupe alkyle comprenant plus de 6 atomes de carbone. On préfère en particulier l'organophilisation avec de la stéarylamine, de l'acide amino-dodécanoïque, ou des imidazoles substitués par 2-hydroxyalkyle.

8. Composition de matériau polymère, exempte d'halogènes pour systèmes conducteurs selon la revendication 6, **caractérisée en ce que** les anions sont de préférence choisis dans le groupe des acides carboxyliques aliphatiques.

9. Composition de matériau polymère, exempte d'halogènes pour systèmes conducteurs selon l'une quelconque des revendications précédentes, **caractérisée en ce qu'**elle peut contenir des additifs sous forme d'adjuvants lubrifiants ou de transformation, de charges, d'agents de nucléation, de stabilisateurs, d'antistatiques, d'agents de modification de la résilience et/ou d'agents ignifuges à effet synergique.

10. Composition de matériau polymère, exempte d'halogènes pour systèmes conducteurs selon la revendication 9, **caractérisée en ce que** les agents ignifuges à effet synergique sont choisis dans le groupe formé par le borate de zinc, le mélamine-cyanurate, l'orthophosphate de dimélamine, le pyrophosphate de dimélamine, l'orthophosphate de mélamine, le borate de mélamine, le phosphate de bore, les esters de l'acide phosphorique ou le sulfure de zinc.

11. Composition de matériau polymère, exempte d'halogènes pour systèmes conducteurs selon l'une quelconque des revendications 9 et 10, **caractérisée en ce que** les agents ignifuges à effet synergique, en particulier choisis parmi les agents ignifuges contenant du phosphore ou de l'azote, sont intercalés dans les silicates du composant (E), choisis parmi les silicates à deux ou à trois couches des phyllosilicates, en particulier les argiles, la montmorillonite, l'hectorite, la vermiculite.

12. Composition de matériau polymère, exempte d'halogènes pour systèmes conducteurs selon la revendication 11, **caractérisée en ce que** l'intercalation des agents ignifuges à effet synergique contenant du phosphore ou de l'azote dans les silicates du composant (E) est réalisée dans une étape de préparation séparée.

13. Procédé pour la préparation d'une composition de matériau polymère, exempte d'halogènes pour systèmes conducteurs selon la revendication 1, **caractérisé en ce que** dans une première étape, un premier mélange, constitué par le polypropylène du composant (A), le polypropylène greffé par de l'anhydride de l'acide maléique du composant (B), le silicate à couches modifié par échange d'ions avec des cations ou des anions organiques du composant (E) et les pigments colorés inorganiques et/ou organiques du composant (F), est transformé à une température de la masse inférieure à 180°C dans une extrudeuse à deux vis et est ainsi précompoundé, le composant (E) étant ajouté en dosant via une alimentation latérale.
Dans une deuxième étape, le précompound, c'est-à-dire le premier mélange, est alors transformé avec un deuxième mélange, constitué par le copolymère de poly(éthylène-acétate de vinyle) ou le terpolymère de poly(éthylène-acrylate-anhydride de l'acide maléique) du composant (C), l'hydroxyde de magnésium ou le polyphosphate d'ammonium du composant (D) et les pigments colorés inorganiques et/ou organiques du composant (F) dans une extrudeuse à deux vis à des températures inférieures à 180°C dans la masse fondue, de manière à obtenir à présent la composition complète de la formulation.

14. Procédé selon la revendication 13, **caractérisé en ce que** les pigments colorés du composant (F) sont ajoutés exclusivement dans le premier mélange ou exclusivement dans le deuxième mélange.

15. Systèmes conducteurs constitués par la composition de matériau polymère, exempte d'halogènes selon l'une quelconque des revendications 1 à 12 destinés à une utilisation dans les domaines de l'automobile, des meubles, des appareils électriques ou de la construction.

16. Systèmes conducteurs selon la revendication 15, ceux-ci comprenant des tubes de protection pour câbles, des tubes de protection pour microcâbles ou des gaines pour câbles.
